# EUROPEAN PATENT APPLICATION

(11) **EP 2 104 018 A2**
(43) Date of publication of application: **23.09.2009**
(21) Application number: 09153799.3
(22) Date of filing: 26.02.2009
(51) Int. Cl.: G06C 21/00, G01R 33/00, G06F 17/30, G06Q 10/00

(54) **Database creation system and database creation method**

(30) Priority: 17.03.2008 JP 2008066967; 05.02.2009 JP 2009024656
(71) Applicant: Aisin AW Co., Ltd., Fujii-cho Anjo-shi, Aichi 444-1192 (JP)
(72) Inventor: Nagase, Kenji, Okazaki-shi, Aichi 444-8564 (JP); Kobayashi, Taiho, Okazaki-shi, Aichi 444-8564 (JP)
(74) Representative: Delumeau, François Guy

(57) **Abstract**

A CPU of an information distribution center (3) extracts from related facility information, if related facility information is received from a navigation device (2), the following: exit IC information pertaining to an exit IC; exit IC date/time information for the exit IC exited; destination facility information for a destination reached after exiting from the exit IC; departure date/time information created when departing the destination; and next destination facility information for a subsequent destination. Such information is then stored in a related facility database (16) as data for statistical processing. Statistical processing of the data for statistical processing from a fixed period stored in the related facility database is then performed for each factor, namely, the exit IC information, the exit IC date/time information for the exit IC exited, the destination facility information, the departure date/time information, to generate next destination facility information. Statistical facility information is subsequently created and stored in the related facility database.

## Description

### BACKGROUND OF THE INVENTION

### 1. Field of the Invention

The present invention relates to a database creation system and a database creation method for creating a database.

### 2. Description of the Related Art

Various art has been proposed in the past that, with respect to a set destination, provide guidance for tourist-related facilities related to the destination. For example, records of a database for searching the names of corresponding tourism-related facilities structured by destination, include the destination name, destination genre, location information, business hours, tourism flag, and tourism-related facility name. There is a navigation device structured such that keys for searching the set destination are used to find the record that corresponds to the destination stored in the database for searching the names of corresponding tourism-related facilities. The names of tourism-related facilities are then extracted from the record and displayed for guidance. (See Japanese Patent Application Publication No. JP-A-2005-345325, paragraphs 0018 to 0021 and FIGS. 2 to 4, for example).

### SUMMARY OF THE INVENTION

However, according to the above structure described in Japanese Patent Application Publication No. JP-A-2005-345325, while simply selecting the name of the tourism-related facility associated with the set destination makes it possible to provide guidance regarding the set tourism-related facility, sometimes the facilities pre-linked to the destination are not facilities that can be recommended to the user. On the other hand, some facilities that are not linked with the set destination may be facilities that should be recommended to the user. This leads to a problem where, for example, different facilities should be recommended to the user depending on the direction of travel from a current position to the destination.

Hence, the present invention was devised in order to resolve the above problem, and it is an object of the present invention to provide a database creation system and database creation method capable of creating a related facility database from which facility information that should be recommended to the user as a subsequent destination can be extracted.
Accordingly the present invention is directed to a database creation system comprising
a departed facility information obtaining unit for obtaining departed facility information pertaining to a departed facility a user has departed,
a travel history information obtaining unit for obtaining travel history information pertaining to a travel history of the user up to the departed facility,
an arrival facility information obtaining unit for obtaining arrival facility information pertaining to an arrival facility the user has subsequently arrived at after departing from the departed facility and
a database creating unit for creating a related facility database that stores and associates the departed facility information with the travel history information and the arrival facility information.
In one particular embodiment, the database creation system further comprises:
a date/time information obtaining unit for obtaining date/time information pertaining to a date and time at which the user departed from the departed facility, wherein
the database creating unit performs classification into a plurality of time slots based on the date/time information and performs statistical processing for each of the plurality of time slots.
The present invention also concerns a database creation method comprising the steps of obtaining departed facility information pertaining to a departed facility a user has departed,
obtaining travel history information pertaining to a travel history of the user up to the departed facility,
obtaining arrival facility information pertaining to an arrival facility the user has subsequently arrived at after departing from the departed facility and
creating a related facility database that associates the departed facility information obtained at the step for obtaining departed facility information with the travel history information obtained at the step for obtaining travel history information and the arrival facility information obtained at the step for obtaining arrival facility information.

In the database creation system according to a first aspect, departed facility information and travel history information up to the departed facility are used as search keys to extract arrival facility information. It is thus possible to create a related facility database capable of extracting facilities that can be recommended as a subsequent destination to a user once the user has departed a facility.

In the database creation system according to a second aspect, date/time information indicating when the user has departed a facility is additionally used as a search key to extract arrival facility information. The departure date and time when leaving for a subsequent destination can thus be considered, making it possible to create a related facility database capable of extracting facilities that can be recommended as a subsequent destination to a user with even greater precision.

In a database creation method according to a third aspect, departed facility information and travel history information up to the departed facility are used as search keys to extract arrival facility information. It is thus possible to create a related facility database capable of extracting facilities that can be recommended as a subsequent destination to a user once the user has departed a facility.

### BRIEF DESCRIPTION OF THE DRAWINGS

FIG. 1 is a block diagram showing a navigation system according to an embodiment;
FIG. 2 is a block diagram showing a navigation device of the navigation system;
FIG. 3 is a flowchart showing related facility information sending processing executed by the navigation device installed in a probe car of the navigation system and related facility database creation processing executed by an information distribution center;
FIG. 4 is a drawing showing an example of a data structure of statistical facility information stored in a related facility database of the information distribution center;
FIG. 5 is a flowchart showing recommended facility guidance processing executed by the navigation device installed in a probe car of the navigation system and facility information distribution processing executed by the information distribution center;
FIG. 6 is a drawing showing an example of a command input screen on which a command instructing whether to display guidance for recommended facilities is input; and
FIG. 7 is a drawing showing an example of a screen displaying a list of recommended facilities.

### DETAILED DESCRIPTION OF THE PREFERRED EMBODIMENT

A database creation system and a database creation method according to the present invention will be described in detail below with reference to the drawings, based on an embodiment realizing the present invention in a navigation system.

### Embodiment

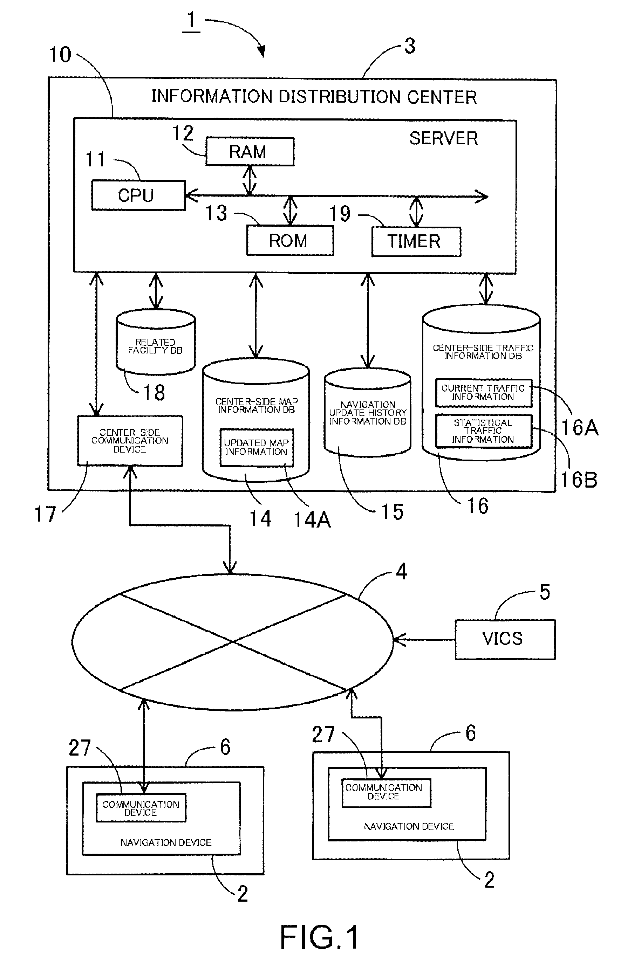

A schematic configuration of a navigation system 1 according to the present embodiment will be explained first using FIG. 1. FIG. 1 is a block diagram showing the navigation system 1 according to the present embodiment.

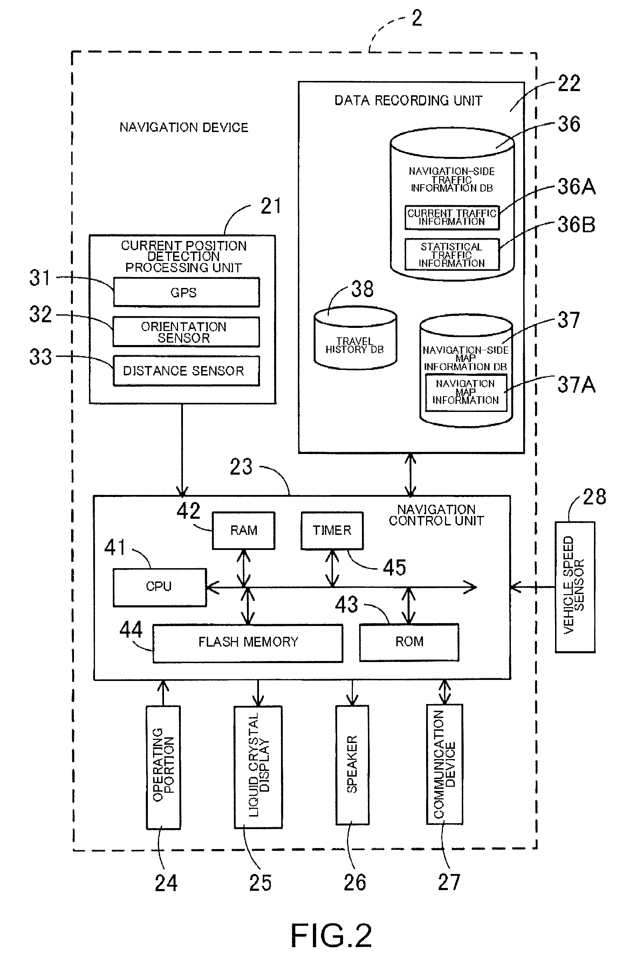

The navigation system 1 according to the present embodiment as illustrated in FIG. 1 is essentially structured from a navigation device 2 installed in probe cars 6; an information distribution center 3 that distributes target facility information extracted from a related facility database (related facility DB) 18 as described later and update information for updating map information to the navigation device 2; and a network 4. The navigation device 2 and the information distribution center 3 are structured so as to enable the sending and receiving of various information via the network 4. Note that details regarding the structure of the navigation device 2 will be explained later using FIG. 2.

The network 4 may use a communication system including communication line networks such as a LAN (Local Area Network), WAN (Wide Area Network), intranet, cellular phone network, telephone network, public communication network, private communication network, and the Internet, for example. The network 4 is also connected with a road traffic information center (VICS (registered trademark)) 5. The navigation device 2 and the information distribution center 3 are structured capable of collecting information from a traffic control system managed by the police, the Japanese Highway Public Corporation, or the like, to create and receive traffic information such as information created pertaining to road traffic congestion, traffic regulation information, and other information at a predetermined time interval via the network 4.

As FIG. 1 shows, the information distribution center 3 is provided with a server 10; a center-side map information database (center-side map information DB) 14 connected to the server 10 that serves as a map information storage unit; a navigation update history information database (navigation update history information DB) 15; a center-side traffic information database (center-side traffic information DB) 16; a center-side communication device 17; and the related facility DB 18.

The server 10 includes a CPU 11 serving as a computing device and a control device that performs an overall control of the server 10, as well as internal storage devices such as a RAM 12 and a ROM 13, and a timer 19 that measures time. The RAM 12 is used by the CPU 11 as a working memory when performing various computational processing. The ROM 13 stores various control programs for performing processing such as current traffic information distribution processing that distributes to the navigation device 2 traffic information regarding current conditions via the network 4, and map information update processing that, based on a request from the navigation device 2, extracts from a center-side map information DB 14 update information, which is used for updating map information in a predetermined area to a new version of map information, among map information stored in the navigation device 2.

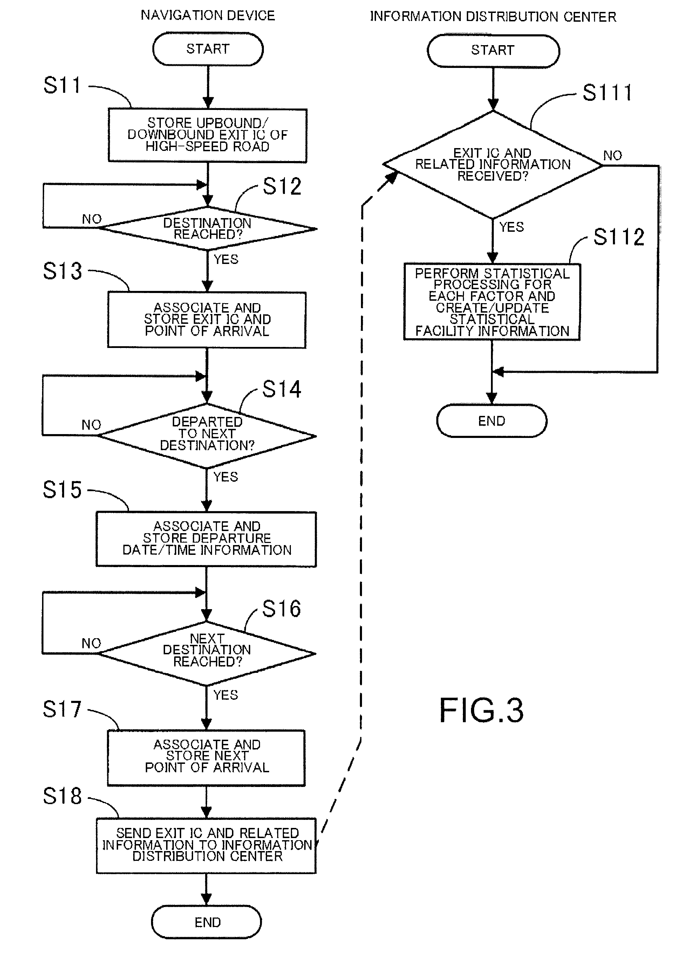

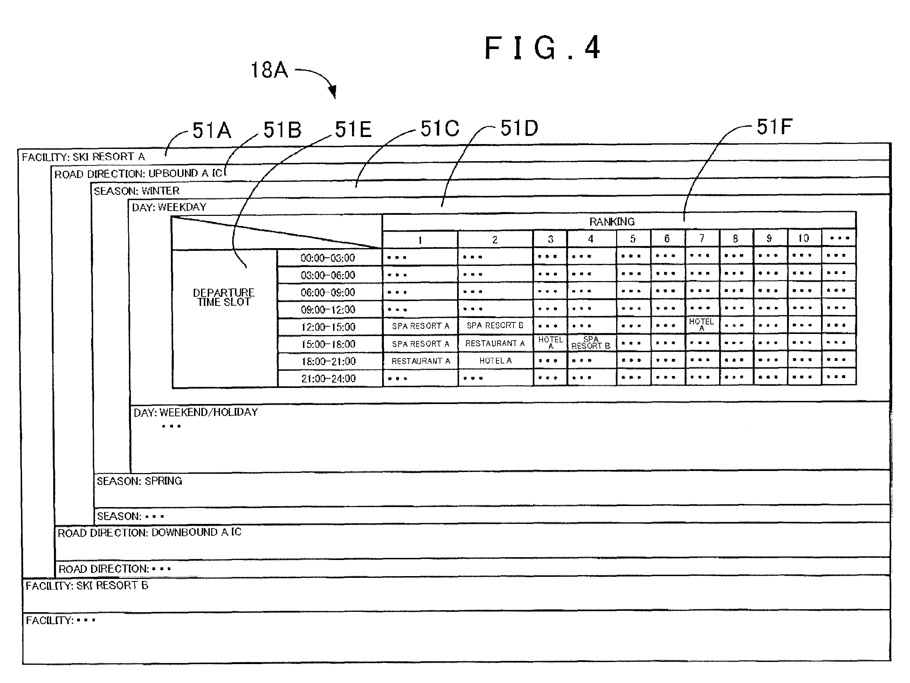

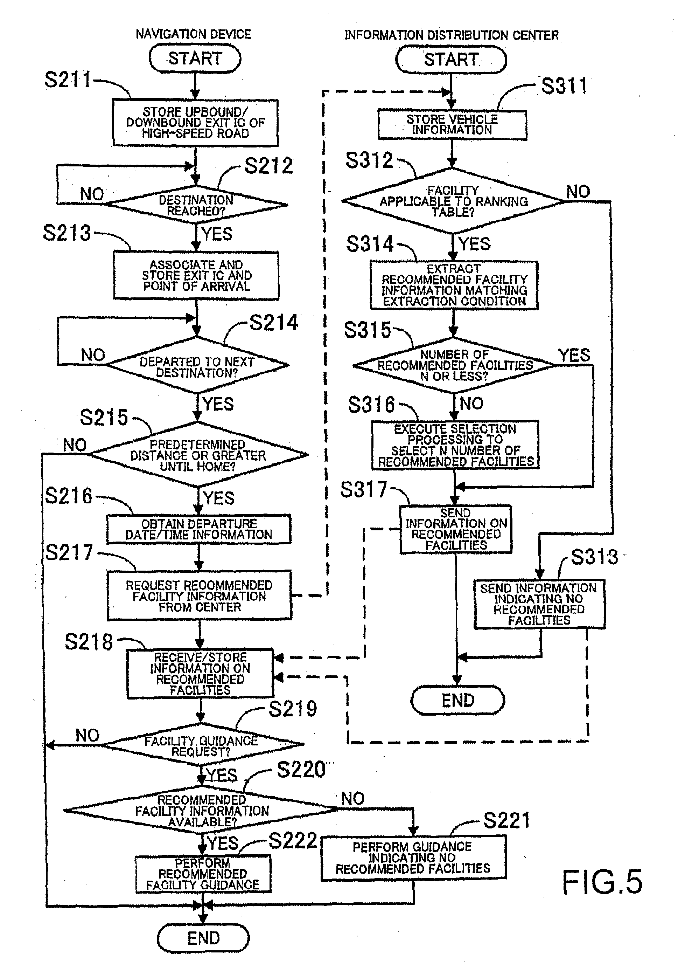

In addition, the ROM 13 stores control programs for performing related facility database creation processing (see FIG. 3) and facility information distribution processing (see FIG. 5), which are explained later. The related facility database creation processing performs statistical processing of travel history information (e.g. interchanges exited and intersections crossed) and related facility information (e.g. points traveled to, facilities traveled to, departure times, subsequent points traveled to, and subsequent facilities traveled to) collected from the navigation device 2 installed in the probe car 6, and then creates and updates statistical facility information 18A (see FIG. 4). Based on a request from the navigation device 2, the facility information distribution processing extracts recommended facility information from the related facility DB 18, which is then distributed via the network 4.

The center-side map information DB 14 stores updating map information 14A, which is sorted by version. The updated map information 14A is map information created by the information distribution center 3 and serves as the basis for updating the map information stored in the navigation device 2. Also stored in the center-side map information DB 14 is update information for updating all or a portion of map information currently stored in the navigation device 2 to the updated map information 14A. Here, the term "version" denotes creation timing information for identifying the timing at which map information was created. By referring to the version, it is possible to identify the timing at which the map information was created.

The updated map information 14A stored in the center-side map information DB 14 records various information required by the navigation device 2 for performing route guidance and map display. For example, the updated map information 14A is structured from map display data for displaying a map; intersection data pertaining to intersections; node data pertaining to nodes; link data pertaining to roads (road links), which are a type of facility; search data for searching a route; store data pertaining to points of interest (POIs) such as stores, which are a type of facility; and search data for searching a point.

The map display data in particular is structured here based on a secondary mesh that is defined as approximately 10 kilometers by 10 kilometers and divided into 4 units (length: 1/2 of the secondary mesh), 16 units (1/4), and 64 units (1/8). Units for each location are set such that the data volume of each unit is generally at the same level. The size of the smallest units, i.e., when the secondary mesh is divided into 64 units, is approximately 1.25 kilometers by 1.25 kilometers.

There are three distribution road categories: a high standard road category formed from national expressways, urban expressways, freeways, ordinary toll roads, and 1- and 2-digit national roads; a general road category formed from 3-digit and higher roads, main local roads, prefectural roads, and municipal roads; and a street category formed from streets. These categories are stored and controlled in the respective versions of the updated map information 14A. For the toll roads, data pertaining to on- and off-ramps (ramp ways) of toll roads, toll booths (interchanges), and the like are also recorded.

The information distribution center 3 updates the map information stored in the navigation device 2 at a timing requested by the navigation device 2, using the newest version of the updated map information 14A among the updated map information 14A stored in the center-side map information DB 14. The navigation update history information DB 15 stores information pertaining to the update history, which indicates updates of the map information stored in the navigation device 2 up to the present time, along with a navigation identifier ID specifying the navigation device 2.

The center-side traffic information DB 16 stores current traffic information 16A. The current traffic information 16A is information pertaining to current road congestion or the like which is created by collecting probe information gathered from the navigation device 2 installed in the probe car 6 (e.g. month, date/time, link information (including mesh ID, link ID, link length, existence of traffic signals, and road class), traffic conditions (including travel time, degree of congestion, and speed), host vehicle position, secondary mesh ID belonging to the host vehicle position, windshield wiper operation state, outside/road surface temperature, weather, ABS (Antilock Brake System) operation information, road surface conditions, and vehicle information (including model, performance specifications, vehicle speed, occupants, vehicle weight distribution rate, and torque application method)), and created by collecting traffic information received from a road traffic information center 5.

The center-side traffic information DB 16 also stores statistical traffic information 16B generated based on a VICS signal from the road traffic information center 5, and past traffic information such as the probe information collected from the probe cars 6. At a timing requested by the navigation device 2, traffic information between intersections, the statistical traffic information 16B, and the like are selected and distributed based on the current traffic information 16A stored in the center-side traffic information DB 16.

The related facility DB 18 stores the statistical facility information 18A (see FIG. 4) that is created by performing statistical processing of travel history information (e.g. interchanges exited and intersections crossed) and related facility information (e.g. points traveled to, facilities traveled to, departure times, subsequent points traveled to, and subsequent facilities traveled to) collected from the navigation device 2 installed in the probe car 6, as described later. The information distribution center 3 then extracts and distributes recommended facility information from the statistical facility information 18A stored in the related facility DB 18 at a timing requested by the navigation device 2, as described later (see FIG. 5).

A schematic configuration of the navigation device 2 structuring the navigation system 1 according to the present embodiment will be explained next using FIG. 2.
FIG. 2 is a block diagram showing the navigation device 2 according to the present embodiment.

As FIG. 2 illustrates, the navigation device 2 according to the present embodiment is structured from the following: a current position detection processing unit 21 that detects a current position of the host vehicle; a data recording unit 22 in which various data is recorded; a navigation control unit 23 that performs various computational processing based on input information; an operating portion 24 that accepts an operation from a user; a liquid crystal display 25 that shows information such as a map to the user; a speaker 26 that outputs voice guidance related to route guidance; and a communication device 27 that enables communication among the road traffic information center 5, the information distribution center 3 and so forth via a cellular phone network or the like. The navigation control unit 23 is also connected with a vehicle speed sensor 28 that detects a travel speed of the host vehicle.

In the description below regarding the structural elements that structure the navigation device 2, the current position detection processing unit 21 is formed from a GPS 31, an orientation sensor 32, a distance sensor 33, and the like, and is capable of detecting a current position, orientation, and travel distance of the host vehicle.

The data recording unit 22 is provided with a hard disk (not shown) that serves as an external storage device and a storage medium, as well as a recording head (not shown) that serves as a driver for reading a navigation-side traffic information database (navigation-side traffic information DB) 36, a navigation-side map information database (navigation-side map information DB) 37, a travel history database (travel history DB) 38, and a predetermined program or the like stored on the hard disk, and for writing predetermined data on the hard disk.

Here, the navigation-side traffic information DB 36 stores current traffic information 36A. The current traffic information 36A is created from road congestion information pertaining to current road congestion or the like formed from the actual congestion length, required time, congestion cause, and estimated time until the end of congestion as received from the information distribution center 3 and the road traffic information center 5, and also created from traffic information such as information regarding traffic restrictions due to road construction, building construction, or the like.

Also, the statistical traffic information 36B of the navigation-side traffic information DB 36 stores the above statistical traffic information 16B distributed from the information distribution center 3 via the communication device 27. The contents of the statistical traffic information 16B stored in the statistical traffic information 36B are updated by downloading the update information distributed from the information distribution center 3 via the communication device 27. Note that the navigation device 2 may be structured so as to store the statistical traffic information 16B supplied from a CD-ROM or the like in the statistical traffic information 36B, and update the statistical traffic information 16B at a predetermined time interval (e.g. every week or up to every three months) based on the travel history.

The navigation-side map information DB 37 stores navigation map information 37A. The navigation map information 37A is used for travel guidance and route searches performed by the navigation device 2, and is subject to updates from the information distribution center 3. Here, the navigation map information 37A includes various information required for performing route guidance and map display, similar to the updated map information 14A. For example, the navigation map information 37A is structured from new road information for identifying newly built roads; map display data for displaying a map; intersection data pertaining to intersections; node data pertaining to nodes; link data pertaining to roads (links); search data for searching a route; store data pertaining to POIs such as stores, which are a type of facility; and search data for searching a point. The contents of the navigation-side map information DB 37 are updated by downloading the update information distributed from the information distribution center 3 via the communication device 27.

The travel history DB 38 sequentially stores for travel through each link probe information (e.g. month, date/time, link information (including mesh ID, link ID, link length, existence of traffic signals, and road class), traffic conditions (including travel time, degree of congestion, and speed), host vehicle position, secondary mesh ID belonging to the host vehicle position, windshield wiper operation state, outside/road surface temperature, weather, ABS (Antilock Brake System) operation information, road surface conditions, and vehicle information (including model, performance specifications, vehicle speed, occupants, vehicle weight distribution rate, and torque application method)).

Each time an interchange or an intersection of a national expressway, urban expressway, freeway, ordinary toll road, or the like is used, the travel history DB 38 sequentially stores the interchange exited and the intersection crossed as travel history information, along with data regarding the season, day of the week, date/time and so forth. Coordinate data of a destination reached, arrival facility information, arrival date/time data, date/time departure data for a subsequent destination, and the like are also associated in the travel history DB 38 as described later and stored.

If the probe car 6 is traveling, the navigation device 2 installed in the probe car 6 sends probe information newly stored in the travel history DB 38 to the information distribution center 3 via the communication device 27 at a predetermined time interval (e.g. at 1-minute, 5-minute, 15-minute, or 30-minute intervals) or per travel through a link subsequent to a sending time at which the probe information was previously sent to the information distribution center 3. In addition, the navigation device 2 also sends the exit interchange and related facility information to the information distribution center 3 via the communication device 27 when a predetermined condition is met as described later.

As FIG. 2 illustrates, the navigation control unit 23 structuring the navigation device 2 includes internal storage devices such as a CPU 41 serving as a computation device and control device that performs an overall control of the navigation device 2; a RAM 42 used as a working memory when the CPU 41 performs various computational processing which stores route data when a route is searched and recommended facility information (described later) and the like received from the information distribution center 3; a ROM 43 that, in addition to a program for control, also stores a probe information sending processing program or the like which obtains probe information and sends the probe information to the information distribution center 3 at a predetermined time interval; and a flash memory 44 that stores a program read from the ROM 43. The navigation control unit 23 further includes a timer 45 for measuring time.

In the present embodiment, various programs are stored in the ROM 43 and various data are stored in the data recording unit 22. However, programs, data, and the like can also be read out from the same external storage device, memory card and so on, and written to the flash memory 44. Furthermore, the programs, data, and the like can be updated by exchanging the memory card or the like.

The navigation control unit 23 is electrically connected with peripherals (actuators) of the operating portion 24, the liquid crystal display 25, the speaker 26, and the communication device 27.

The operating portion 24 is operated when correcting a current position at the start of the travel, inputting a place of departure that serves as a guidance start point and a destination that serves as a guidance end point, and searching for information pertaining to a facility. The operating portion 24 is formed from various keys and a plurality of operation switches. Based on switch signals output from the pressing of the switches or the like, the navigation control unit 23 performs controls in order to execute various corresponding operations. A front surface of the liquid crystal display 25 is structured with a touch panel, and various instruction commands can be input by pressing a button displayed on the screen.

The liquid crystal display 25 shows a route guidance screen that displays a map based on the navigation map information 37A and traffic information regarding the links, as well as operation guidance, an operation menu, key guidance, a guidance route from the current position to the destination, guidance information along the guidance route, traffic information, news, a weather forecast, the time of day, mail, and television programs. The speaker 26 outputs voice guidance that guides travel along the guidance route based on a command from the navigation control unit 23. Here, the voice guidance that guides travel may say, for example, "turn right at XX intersection 200 meters ahead".

The communication device 27 is a means of communication using a cellular phone network or the like for communicating with the information distribution center 3. The communication device 27 sends and receives the newest version of update map information, current traffic information and so forth to and from the information distribution center 3. In addition to the information distribution center 3, the communication device 27 also receives traffic information sent from the road traffic information center 5 or the like which includes various information such as congestion information, regulation information, parking information, traffic accident information, and the state of congestion at service areas.

Next, processing in the navigation system 1, that is, related facility information sending processing, wherein the CPU 41 of the navigation device 2 sends related facility information structured from interchanges exited, facilities reached, and the like to the information distribution center 3, and related facility database creation processing, which is executed by the CPU 11 of the information distribution center 3 when related facility information is received from the navigation device 2, will be explained based on FIGS. 3 and 4. FIG. 3 is a flowchart showing the related facility information sending processing executed by the navigation device 2 installed in the probe car 6 of the navigation system 1 and the related facility database creation processing executed by the information distribution center 3.

The related facility information sending processing executed by the CPU 41 of the navigation device 2 installed in the probe car 6 will be described first based on FIG. 3. Note that the program shown in the flowchart at S11 to S 19 of FIG. 3 is stored in the ROM 43 provided in the navigation device 2, and executed by the CPU 41 in the case of travel through an exit interchange of a national expressway, urban expressway, freeway, ordinary toll road, or the like.

As shown in FIG. 3, first at step (abbreviated to S below) 11, in the case of travel through an exit interchange (abbreviated to exit IC below) of a national expressway, urban expressway, freeway, ordinary toll road, or the like, the CPU 41 stores travel history information that is structured from exit IC information (including exit IC coordinate data (e.g. longitude and latitude), name, and upbound or downbound direction), exit IC date/time information (including data regarding the season, day of the week, and date/time), and the like in the travel history DB 38. At S11, the exit IC information stored in the travel history DB 38 corresponds to travel history information of the user up to a departed facility.

At S12 the CPU 41 waits until the destination is reached (NO at S12). More specifically, the CPU 41 waits until an ignition switch is turned from on to off, based on a detection signal sent from a vehicle ECU (not shown). If the ignition switch is turned from on to off, then the CPU 41 determines that the destination has been reached (YES at S 12) and the CPU 41 proceeds to the processing at S 13.

At S13 the CPU 41 detects the host vehicle position and the host vehicle orientation using the current position detection processing unit 21, and stores coordinate data (e.g. latitude and longitude data) representing the host vehicle position in the RAM 42 as coordinate data of the destination reached. Also, the CPU 41 obtains facility information for the destination from the navigation map information 37A, which it then stores in the RAM 42. The CPU 41 reads the coordinate data and the facility information for the destination from the RAM 42, and also reads the travel history information stored in the travel history DB 38 at S11. Then, the CPU 41 creates related facility information that associates the coordinate data and the facility information for the destination with the travel history information, which it then stores again in the travel history DB 38.

As an example, the host vehicle exits from the upbound A interchange at 4:05 AM on a Friday in winter at S11 and reaches the ski resort A at S 12 where the host vehicle position is "XX degrees north latitude, YYY degrees east longitude". In such case, at S 13 the CPU 41 creates associated related facility information, namely, "winter - Friday - 4:05 AM - upbound A interchange - ski resort A - XX degrees north latitude, YYY degrees east longitude", which it stores in the travel history DB 38.

At S 14 the CPU 41 waits until departure to the next destination (NO at S 14). More specifically, the CPU 41 waits until an ignition switch is turned from off to on, based on a detection signal sent from a vehicle ECU (not shown). If the ignition switch is turned from off to on (YES at S 14), then the CPU 41 determines that the host vehicle is departing to the next destination and proceeds to the processing at S 15.

At S 15 the CPU 41 obtains data regarding the season, day of the week, date/time and so forth once the ignition switch is turned on from the timer 45, which it then stores in the RAM 42 as departure date/time information. The CPU 41 reads the departure date/time information from the RAM 42, and also reads the related facility information stored in the travel history DB 38 at S 13. Then, the CPU 41 creates related facility information that associates the related facility information with the departure date/time information, which it then stores again in the travel history DB 38.

As an example, the related facility information consisting of "winter - Friday - 4:05 AM - upbound A interchange - ski resort A - XX degrees north latitude, YYY degrees east longitude" is stored in the travel history DB 38 at S 13 and the ignition switch is turned from off to on at 3:01 PM that day. In such case, the CPU 41 creates related facility information consisting of "winter - Friday - 4:05 AM - upbound A interchange - ski resort A - XX degrees north latitude, YYY degrees east longitude - winter - Friday - 3:01 PM", which it stores in the travel history DB 38.

At S16 the CPU 41 waits until the next destination is reached (NO at S16). More specifically, the CPU 41 waits until an ignition switch is turned from on to off, based on a detection signal sent from a vehicle ECU (not shown). If the ignition switch is turned from on to off, then the CPU 41 determines that the next destination has been reached (YES at S16) and the CPU 41 proceeds to the processing at S 17.

At S17 the CPU 41 detects the host vehicle position and the host vehicle orientation using the current position detection processing unit 21, and stores coordinate data (e.g. latitude and longitude data) representing the host vehicle position in the RAM 42 as coordinate data of the next destination reached. Also, the CPU 41 obtains facility information for the next destination from the navigation map information 37A, which it then stores in the RAM 42. The CPU 41 reads the coordinate data and the facility information for the next destination from the RAM 42, and also reads the related facility information stored in the travel history DB 38 at S15. Then, the CPU 41 creates related facility information that associates the coordinate data and the facility information for the next destination with the related facility information, which it then stores again in the travel history DB 38.

As an example, the related facility information consisting of "winter - Friday - 4:05 AM - upbound A interchange - ski resort A - XX degrees north latitude, YYY degrees east longitude - winter - Friday - 3:01 PM" is stored in the travel history DB 38 at S 15, the host vehicle position when the ignition switch was turned off is "PP degrees north latitude, QQQ degrees east longitude", and the next destination is the spa resort A. In such case, at S17 the CPU 41 creates associated related facility information consisting of "winter - Friday - 4:05 AM - upbound A interchange - ski resort A - XX degrees north latitude, YYY degrees east longitude - winter - Friday - 3:01 PM - spa resort A - PP degrees north latitude, QQQ degrees east longitude", which it stores in the travel history DB 38.

At S 18 the CPU 41 again reads the related facility information stored in the travel history DB 38 at S 17, and then sends the related facility information together with a navigation identifier ID that identifies the navigation device 2 to the information distribution center 3, after when the CPU 41 ends the processing.
In one embodiment of the present invention, each of the departed facility information obtaining unit, the travel history information obtaining unit, the arrival facility information obtaining unit and the database creating unit is implemented by the CPU 41.
In another embodiment, at least one of the four units above is implemented by the CPU 11.

The related facility database creation processing executed by the CPU 11 of the information distribution center 3 will be described next based on FIG. 3. Note that the program shown in the flowchart at S111 to S 112 of FIG. 3 is stored in the ROM 13 provided in the navigation device 3, and executed by the CPU 11 at a predetermined time interval (e.g. approximately every 0.01 to 0.1 seconds).

At S111 the CPU 11 first executes determination processing that determines whether the related facility information sent from the navigation device 2 at S18 has been received. If the related facility information has not been received (NO at S111), then the CPU 11 ends the processing.

Meanwhile, if the related facility information has been received (YES at S111), then the CPU 11 stores the received related facility information in the RAM 12 and proceeds to the processing at S 112. At S 112 the CPU 11 extracts from the received related facility information the following: exit IC information pertaining to the exit IC (including the exit IC coordinate data, name, and upbound or downbound direction); exit IC date/time information for the exit IC exited (which is structured from data regarding the season, day of the week, date/time and so forth); destination facility information for the destination reached after exiting from the exit IC; departure date/time information created when departing the destination; and next destination facility information for a subsequent destination. Such information is then stored in the related facility DB 18 as data for statistical processing.

The CPU 11 then performs statistical processing of the data for statistical processing from a fixed period (e.g. the past 6 months) stored in the related facility DB 18 for each factor, namely, the destination facility information, the exit IC information, the exit IC date/time information for the exit IC exited, the departure date/time information, to generate next destination facility information. Following the creation/update of the statistical facility information 18A (see FIG. 4) described later, the CPU 11 ends the processing.

For example, the CPU 11 again reads the related facility information received from the RAM 12, and extracts the next destination facility information, the exit IC information, the departure date/time information, and the next destination facility information. The data for statistical processing in a fixed period (e.g. the past 6 months) that includes the destination facility information, the exit IC information, the departure date/time information, and the next destination facility information is then read from the related facility DB 18 and stored in the RAM 12.

Subsequently, the CPU 11 again reads the related facility information received from the RAM 12 and extracts the departure date/time information created when the host vehicle departed the destination, in order to identify a departure time slot (see FIG. 4) in the statistical facility information 18A to which the departure time in the departure date/time information belongs. The CPU 11 next identifies the data for statistical processing that includes the departure time of the departure date/time information residing in the identified departure time slot from the data for statistical processing stored in the RAM 12. The next destination facility information is sequentially read and stored in the RAM 12.

The CPU 11 performs statistical processing of the sequentially read next destination facility information and sorts such information in the order of most selected first, i.e., sorts in the order of highest recommended first. After storing such information in a ranking 51F (see FIG. 4) of the departure time slots corresponding to the statistical facility information 18A stored in the related facility DB 18 and updating the statistical facility information 18A, the CPU 11 ends the processing. Thus, the CPU 11 is capable of updating the statistical facility information 18A each time related facility information is received form the navigation device 2 installed in the probe car 6. Furthermore, when a request command is received from the navigation device 2 that requests recommended facility information as described later, the CPU 11 can distribute facility information pertaining to a recommended facility (see FIG. 5). Note that the CPU 11 may execute the processing at S 112 each time the related facility information received from the navigation device 2 installed in the probe car 6 reaches a predetermined amount (e.g. 100 units of information), or at a predetermined time interval (e.g. every hour).

An example of the data structure of the statistical facility information 18A stored in the related facility DB 18 will be described here based on FIG. 4. FIG. 4 is a drawing showing an example of the data structure of the statistical facility information 18A stored in a related facility DB 18. As FIG. 4 illustrates, the statistical facility information 18A is structured from the following: a facility 51A representing facility information of the destination reached subsequent to the exit IC; a road direction 51B representing the name of the exit IC and whether the exit IC is upbound or downbound; a season 51C representing the season during which the host vehicle departed for a subsequent destination; a day 51D representing the day of the week on which the host vehicle departed for a subsequent destination; and a ranking 51F representing an order in which subsequent destinations are recommended for each departure time slot 51E, which represents a time slot during which the host vehicle departed for a subsequent destination.

The road direction 51B is data subordinate to the facility 51A. The road direction 51B divides the departure time slots 51E according to the exit IC and whether the exit IC is upbound or downbound. The season 51C is data subordinate to the road direction 51B. The season 51C indicates the season during which the host vehicle departed for a subsequent destination, and divides the departure time slots 51E according to the seasons of winter, spring, summer, and fall. The day 51D is data subordinate to the season 51C. The day 51D indicates the day of the week on which the host vehicle departed for a subsequent destination, and divides the departure time slots 51E according to whether the day is a weekday, i.e., Monday to Friday, or a weekend, i.e., Saturday, Sunday or a holiday.

The departure time slots 51E are data subordinate to the day 51D. The departure time slots 51E divide the ranking 51F representing an order in which subsequent destinations are recommended into three-hour time slots, namely, 00:00 to 03:00, 03:00 to 06:00, 06:00 to 09:00, and so forth up to 21:00 to 24:00. Note that the departure time slots 51E may also divide the ranking 51F representing the order in which subsequent destinations are recommended into 15-minute, 30-minute, 1-hour, 2-hour, or 6-hour time slots, or AM and PM time slots.

The ranking 51F is data for selecting a facility to recommend as a subsequent destination for each time slot of the departure time slots 51E when the host vehicle has departed from the facility 51A, and the facility information (e.g. facility name, coordinate position data, and travel time) are stored in order from the most selected first, i.e., in order from the highest recommended first. In other words, the ranking 51F is data statistically processed for each factor, namely, the facility 51A, the road direction 51B, the season 51C, the day 51D, and the departure time slots 51E.

As an example, the facility 51A is the ski resort A, the road direction 51B is the upbound A interchange (A IC), the season 51C is winter, the day 51D is a weekday, and the departure time slot is 12:00 to 15:00. In such case, the ranking 51F corresponds to spa resort A, spa resort B, ..., hotel A, ..., and as subsequent destinations can be recommended in the order of spa resort A, spa resort B, ..., hotel A, ... to a user who has arrived at the ski resort A via the upbound A IC. In other words, recommendations can be made in the order of most popular first.

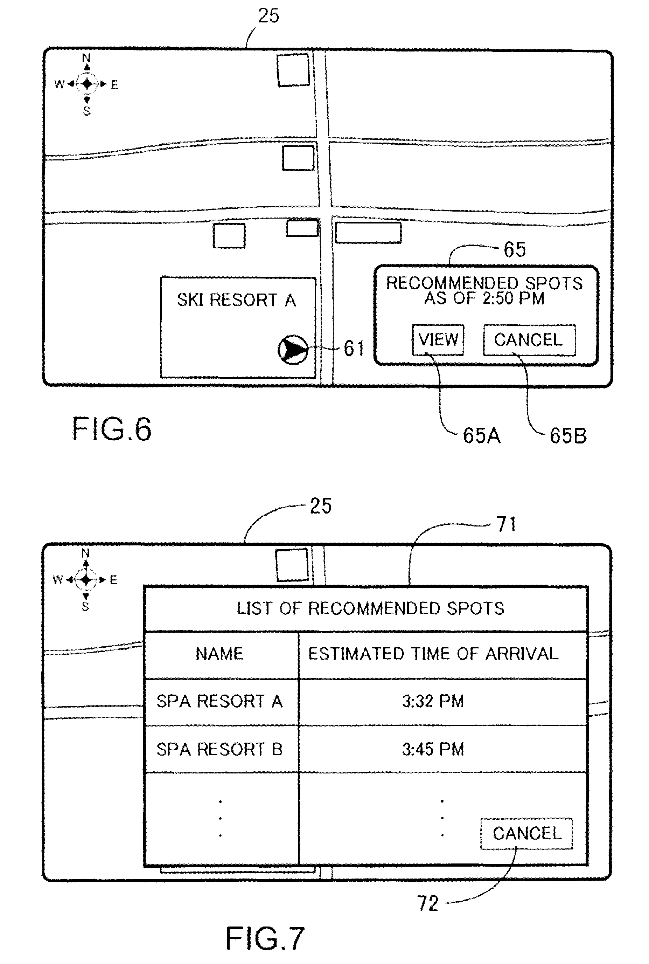

Next, processing in the navigation system 1, that is, recommended facility guidance processing, which the CPU 41 of the navigation device 2 executes upon departure to a subsequent destination, and facility information distribution processing, which is executed by the CPU 11 of the information distribution center 3 in order to distribute facility information serving as a subsequent destination to the navigation device 2, will be explained based on FIGS. 5 and 7. FIG. 5 is a flowchart showing the recommended facility guidance processing executed by the navigation device 2 installed in the probe car 6 of the navigation system 1 and the facility information distribution processing executed by the information distribution center 3.

The recommended facility guidance processing executed by the CPU 41 of the navigation device 2 installed in the probe car 6 will be described first based on FIG. 5. Note that the program shown in the flowchart at S211 to S222 of FIG. 5 is stored in the ROM 43 provided in the navigation device 2, and executed by the CPU 41 in the case of travel through an exit IC of a national expressway, urban expressway, freeway, ordinary toll road, or the like.
As shown in FIG. 5, first at S211, in the case of travel through an exit IC of a national expressway, urban expressway, freeway, ordinary toll road, or the like, the CPU 41 stores travel history information that is structured from exit IC information (including exit IC coordinate data (e.g. longitude and latitude), name, and upbound or downbound direction), exit IC date/time information (including data regarding the season, day of the week, and date/time), and the like in the travel history DB 38. At S211, the exit IC information stored in the travel history DB 38 corresponds to travel history information of the user up to a departed facility.
At S212 the CPU 41 waits until the destination is reached (NO at S212). More specifically, the CPU 41 waits until an ignition switch is turned from on to off, based on a detection signal sent from a vehicle ECU (not shown). If the ignition switch is turned from on to off, then the CPU 41 determines that the destination has been reached (YES at S212) and the CPU 41 proceeds to the processing at S213.
At S213 the CPU 41 detects the host vehicle position and the host vehicle orientation using the current position detection processing unit 21, and stores coordinate data (e.g. latitude and longitude data) representing the host vehicle position in the RAM 42 as coordinate data of the destination reached. Also, the CPU 41 obtains facility information for the destination from the navigation map information 37A, which it then stores in the RAM 42. The CPU 41 reads the coordinate data and the facility information for the destination from the RAM 42, and also reads the travel history information stored in the travel history DB 38 at S211. Then, the CPU 41 associates the travel history information with the coordinate data and the facility information for the destination, which it then stores in the RAM 42.
At S214 the CPU 41 waits until departure to the next destination (NO at S214). More specifically, the CPU 41, waits until an ignition switch is turned from off to on, based on a detection signal sent from a vehicle ECU (not show). If the ignition switch is turned from off to on (YES at S214), then the CPU 41 determines that the host vehicle is departing to the next destination and proceeds to the processing at S215.

At S215 the CPU 41, reads the coordinate data for the destination from the RAM 42, and executes determination processing that determines whether a distance to a home position set in advance is equal to or greater than a predetermined distance (e.g. approximately 50 kilometers or more). If the distance to the home position is less than the predetermined distance (NO atS215), then the CPU 41 determines that facility guidance for the next destination is not required and ends the processing.

Meanwhile, if the distance to the home position is equal to or greater than the predetermined distance (YES at S215), then the CPU 41 proceeds to the processing at S216. At S216 the CPU 41 obtains the departure date/time information (including data regarding the season, day of the week, and date/time) from the timer 45, and stores such information in the RAM 42. The CPU 41 reads the departure date/time information from the RAM 42, and also reads the travel history information, the coordinate data for the destination, and the facility data for the destination. Then, the CPU 41 associates the departure date/time information with the travel history information, the coordinate data for the destination, and the facility information for the destination, which it then stores in the RAM 42.

At S217 the CPU 41 sends to the information distribution center 3 a request command that requests recommended facility information, as well as , the exit IC information (including the exit IC coordinate data, name, and upbound or downbound direction) pertaining to the exit IC associated and stored in the RAM 42, the facility information (including the coordinate data for the destination, facility information for the destination, and the like) pertaining to the facility at the current position of the host vehicle, and the departure date/time information (including data regarding the season, day of the week, and date/time).

Subsequently at S218 the CPU 41 stores information pertaining to the recommended facilities (recommended facility information (including the order in which the recommended facilities are recommended facility name, coordinate position, and estimated time of arrival), or information indicating that there is no recommended facility) received from the information distribution center 3 in the RAM 42. At S219 the CPU 41 next executes determination processing that determines whether a guidance request command that requests guidance regarding the recommended facilities received at S218 has been input via the operating portion 24.

If the guidance request command has not been input via the operating portion 24 (NO at S219), then the CPU 41 ends the processing. Meanwhile, if the guidance request command has been input via the operating portion 24 (YES at S219), then the CPU 41 proceeds to the processing at S220.
At S220 the CPU 41 determines whether there is recommended facility information. More specifically, the CPU 41 determines whether the recommended facility information is stored as information pertaining to the recommended facilities stored in the RAM 42. If it is not determined that there is recommended facility information, that is, if information indicating that there is no recommended facility is stored as information pertaining to the recommended facilities stored in the RAM 42 (NO at S220), then the CPU 41 proceeds to the processing at S221. At S221, the CPU 41 performs guidance notifying that there is no recommended facility, and ends the processing.
Meanwhile, if it is determined that there is recommended facility information (YES at S220), then the CPU 41 proceeds to the processing at S222.
At S222 the CPU 41 reads recommended facility information received from the information distribution center 3 from the RAM 42, and displays a list of the recommended facilities on a display screen of the liquid crystal display 25. The CPU 41 then ends the processing.
In one embodiment of the present invention, each of the departed facility information obtaining unit, the travel history information obtaining unit, the arrival facility information obtaining unit and the database creating unit is implemented by the CPU 41.
In another embodiment, at least one of the four units above is implemented by the CPU 11.

Here, an example of the display screen of the liquid crystal display 25 used in the processing at S219 and S222 will be described based on FIGS. 6 and 7. FIG. 6 is a drawing showing an example of a command input screen on which a command instructing whether to display guidance for recommended facilities is input. FIG. 7 is a drawing showing an example of a screen displaying a list of recommended facilities. As shown in FIG. 6, the CPU 41 displays a map of the vicinity of the host vehicle position on the screen of the liquid crystal display 25, and also displays a vehicle position marker 61 that represents the host vehicle position. In addition, the CPU 41 displays a guidance instruction object 65 in the lower right side of the screen where a command is input that instructs whether to display guidance regarding recommended facilities recommended as a subsequent destination.

The guidance instruction object 65 shows the text "recommended spots as of 2:50 PM" that represents guidance regarding recommended facilities recommended at the present time, and also shows a display button 65A for instructing the display of guidance regarding recommended facilities and a cancel button 65B for instructing that guidance regarding recommended facilities not be displayed.

If the cancel button 65B is pressed or if a predetermined amount of time (e.g. approximately 30 seconds) has passed since displaying the guidance instruction object 65, then the CPU 41 determines that an instruction not to display guidance regarding the recommended facilities has been made (NO at S219). The CPU 41 consequently ends the processing and performs ordinary map display. Meanwhile, if the display button 65A is pressed, then the CPU 41 determines that an instruction to display guidance regarding the recommended facilities has been made (YES at S219).

Next as shown in FIG. 7, the CPU 41 reads facility information pertaining to the recommended facilities received from the information distribution center 3 from the RAM 42, and displays a list display object 71 that displays the recommended facilities, the estimated time of arrival to the respective recommended facilities, and the order of recommendation in a list format on the display screen of the liquid crystal display 25. If any one of the names of the recommended facilities displayed on the list display object 71 is pressed, then the CPU 41 initiates route guidance to the recommended facility. Meanwhile, if a cancel button 72 is pressed, then the CPU 41 ends the processing and performs ordinary map display.

The facility information distribution processing executed by the CPU 11 of the information distribution center 3 will be described next based on FIG. 5. Note that the program shown in the flowchart at S311 to S317 of FIG. 5 is stored in the ROM 13 provided in the information distribution center 3, and executed by the CPU 11 in the case of a request command received from the navigation device 2 requesting recommended facility information.

First at S311 the CPU 11 receives a request command that requests recommended facility information sent from the navigation device 2 at S217, as well as vehicle information such as the navigation identifier ID, the exit IC information pertaining to the exit IC, the facility information () pertaining to the facility at the current position of the host vehicle, and the departure date/time information (). This vehicle information is then stored in the RAM 12.
Next at S312, the CPU 11 executes determination processing that determines, based on the facility information stored in the RAM 12, whether a facility at the current position of the host vehicle is a facility included in the facility 51A data on the statistical facility information 18A stored in the related facility DB 18.
If a facility at the current position of the host vehicle is a facility not included in the facility 51A data of the statistical facility information 18A stored in the related facility DB 18 (NO at S312), then the CPU 11 proceeds to the processing at S313. At S313 the CPU 11 sends to the host vehicle information indicating that there is no recommended facility corresponding to the facility at the current position of the host vehicle, and ends the processing.
Meanwhile, if a facility at the current position of the host vehicle is a facility included in the facility 51A data of the statistical facility information 18A stored in the related facility DB 18 (YES at S312), then the CPU 11 proceeds to the processing at S314.

Next, from the exit IC information, the facility information, and the departure date/time information stored in RAM 12, the CPU 11 then identifies the facility 51A, the road direction 51B, the season 51C, the day 51D, and the departure time slot 51E in that order, with such information structuring the statistical facility information 18A stored in the related facility DB 18. The CPU 11 subsequently reads in the order of recommendation the respective recommended facility information pertaining to the recommended facilities in the ranking 51F that corresponds to the departure time slot 51E, and stores such recommended facility information in the RAM 12.

At S315 the CPU 11 next executes determination processing that determines whether the quantity of recommended facility information read from the statistical facility information 18A is equal to or less than a quantity N (e.g. equal to or less than 5 facilities). If the quantity of recommended facility information read from the statistical facility information 18A is equal to or less than the quantity N (e.g. equal to or less than 5 facilities) (YES at S315), then the CPU 11 proceeds to the processing at S317. At S317 the CPU 11 reads all the recommended facility information from the RAM 12 and sends the recommended facility information to the navigation device 2 via the center-side communication device 17, after which the CPU 11 ends the processing.

Meanwhile if the quantity of recommended facility information read from the statistical facility information 18A is greater than the quantity N (e.g. 6 or more facilities) (NO at S315), then the CPU 11 proceeds to the processing at S316. At S316 the CPU 11 reads all the recommended facility information from the RAM 12 and selects recommended facilities in the quantity of N or less (e.g. 5 or less facilities) in accordance with a predetermined condition for extraction (e.g. selects in the order of the highest recommended facility first) and stores such recommended facilities in the RAM 12 again, after which the CPU 11 proceeds to the processing at S317. At S317 the CPU 11 reads all the recommended facility information from the RAM 12 and sends the recommended facility information to the navigation device 2 via the center-side communication device 17, after which the CPU 11 ends the processing.

As explained in detail above, in the case of travel through an exit IC of a national expressway, urban expressway, freeway, ordinary toll road, or the like, and arrival at a destination and a subsequent destination, then in the navigation system 1 according to the present embodiment, the CPU 41 of the navigation device 2 creates the related facility information, wherein the travel history information, which is structured from exit IC information (including the exit IC coordinate data, name, and upbound or downbound direction), exit IC date/time information (including data regarding the season, day of the week, and date/time), and the like, is associated with the following:
destination coordinate data and facility information; departure date/time information regarding the date and time at which this destination was departed; and subsequent destination coordinate data and facility information. The CPU 41 sends such information together with a navigation identifier ID that identifies the navigation device 2 to the information distribution center 3 (S 11 to S 18).

The CPU 11 of the information distribution center 3 extracts from related facility information, if related facility information is received from the navigation device 2, the following: exit IC information pertaining to the exit IC; exit IC date/time information for the exit IC exited; destination facility information for the destination reached after exiting from the exit IC; departure date/time information created when departing the destination; and next destination facility information for a subsequent destination. Such information is then stored in the related facility DB 18 as data for statistical processing. The CPU 11 then performs statistical processing of the data for statistical processing from a fixed period (e.g. the past 6 months) stored in the related facility DB 18 for each factor, namely, the destination facility information, the exit IC information, the exit IC date/time information for the exit IC exited, the departure date/time information, to generate next destination facility information from the received related facility information. The CPU 11 creates the statistical facility information 18A sorted in the order of most selected first, i.e., sorted in the order of highest recommended first, and stores the statistical facility information 18A in the related facility DB 18 (S111 to S112).

Accordingly, the CPU 11 identifies the exit IC information (e.g. exit IC name, and upbound or downbound direction), exit IC date/time information when exiting from the exit IC (e.g. a Sunday in February during winter), destination facility information (e.g. destination facility name), and departure date/time information (e.g. 3:18 PM, Sunday in February during winter) from the statistical facility information 18A stored in the related facility DB 18. It is thus possible to extract next destination facility information sorted in the order of highest recommended first.

Accordingly, upon departing to the next destination, the CPU 41 of the navigation device 2 sends the exit IC information, the exit IC date/time information for the exit IC exited, the destination facility information, and the departure date/time information to the information distribution center 3 at the timing of departure. As a consequence, the next destination facility information sorted in the order of highest recommended first can be received in a predetermined quantity from the information distribution center 3. Also, the CPU 41 can display the received predetermined quantity of next destination facility information to the user as a list of facilities that can be recommended as a subsequent destination.

Note that the present invention is not limited to the above embodiment, and various improvements and modifications are naturally possible within the scope of the present invention.

For example, if the CPU 11 at S 112 creates and updates the statistical facility information stored in the related facility DB 18, then the CPU 11 may read the statistical facility information 18A from the related facility DB 18 again and send all the statistical facility information 18A to the navigation device 2. Accordingly, the CPU 41 of the navigation device 2 can store the received statistical facility information 18A in the navigation-side map information DB 37 and execute the processing at S311 to S314.

## Claims

1. A database creation system comprising:
a departed facility information obtaining unit (11, 41) for obtaining departed facility information pertaining to a departed facility a user has departed;
a travel history information obtaining unit (11, 41) for obtaining travel history information pertaining to a travel history of the user up to the departed facility;
an arrival facility information obtaining unit (11, 41) for obtaining arrival facility information pertaining to an arrival facility the user has subsequently arrived at after departing from the departed facility; and
a database creating unit (11, 41) for creating a related facility database (18) that associates the departed facility information with the travel history information and the arrival facility information.

2. The database creation system according to claim 1, further comprising:
a date/time information obtaining unit (11, 41) for obtaining date/time information pertaining to a date and time at which the user departed from the departed facility, wherein
the database creating unit performs classification into a plurality of time slots (51E) based on the date/time information and performs statistical processing for each of the plurality of time slots.

3. A database creation method comprising the steps of:
obtaining departed facility information pertaining to a departed facility a user has departed;
obtaining travel history information pertaining to a travel history of the user up to the departed facility;
obtaining arrival facility information pertaining to an arrival facility the user has subsequently arrived at after departing from the departed facility; and
creating a related facility database (18) that associates the departed facility information obtained at the step for obtaining departed facility information with the travel history information obtained at the step for obtaining travel history information and the arrival facility information obtained at the step for obtaining arrival facility information.
